# EUROPÄISCHE PATENTSCHRIFT

(11) **EP 3 586 330 B1**
(45) Veröffentlichungstag und Bekanntmachung des Hinweises auf die Patenterteilung: **14.04.2021**
(21) Anmeldenummer: 18704552.1
(22) Anmeldetag: 12.02.2018
(51) Int. Cl.: G01S 7/521

(54) **SCHALLWANDLER**
SOUND TRANSDUCER
TRANSDUCTEUR ACOUSTIQUE

(30) Priorität: 24.02.2017 DE 102017203042
(43) Veröffentlichungstag der Anmeldung: 01.01.2020
(73) Patentinhaber: Robert Bosch GmbH, 70442 Stuttgart (DE)
(72) Erfinder: HENNEBERG, Johannes, 71093 Weil Im Schoenbuch (DE); GERLACH, Andre, 71229 Leonberg-Hoefingen (DE)
(86) Internationale Anmeldenummer: PCT/EP2018/053415
(87) Internationale Veröffentlichungsnummer: WO 2018/153712

(56) Entgegenhaltungen:
- EP-A2- 0 308 931
- DE-A1-102012 211 011
- DE-A1-102015 106 044
- JP-A- 2010 050 963
- US-A1- 2006 158 066

## Beschreibung

Die Erfindung betrifft einen Schallwandler umfassend einen Membrantopf, ein Wandlerelement und ein Gehäuse, wobei der Membrantopf eine Membran und eine Wandung aufweist.

### Stand der Technik

Ultraschallsensoren werden unter anderem in Automobil- und Industrieanwendungen zur Erfassung des Umfelds eingesetzt. Objekte in der Umgebung können erkannt werden, indem durch den Ultraschallsensor ein Ultraschallsignal ausgesendet wird und das von einem Objekt reflektierte Ultraschallecho wieder empfangen wird. Aus der Laufzeit zwischen dem Aussenden des Ultraschallsignals und dem Empfangen des Ultraschallechos sowie der bekannten Schallgeschwindigkeit kann dann die Entfernung zu dem Objekt berechnet werden.

Die Ultraschallsensoren umfassen typischerweise einen Schallwandler mit einer Membran, einem Wandlerelement und einem Gehäuse. Bei dem Wandlerelement handelt es sich beispielsweise um ein piezokeramisches Element, welches nach Anlegen einer elektrischen Spannung die Membran in eine Schwingung versetzt bzw. zum Empfangen von Ultraschallechos die vom Schalldruck vor der Membran angeregten Schwingungen auf der Membran in ein elektrisches Signal umwandelt. Derartige Schallwandler sind im Stand der Technik bekannt, siehe hierzu beispielsweise DE 10 2012 201 884 A1.

Aus der US 2006/0158066 A1 ist ein Ultraschallsensor bekannt, der ein Innengehäuse aus Kunststoff aufweist, wobei ein unterer Abschnitt des Innengehäuses eine Membran ausbildet. Auf dieser Membran ist ein leitfähiger Film angeordnet und auf diesem leitfähigen Film befindet sich ein Piezoelement.

Die EP 0 308 931 A2 offenbart einen Ultraschallwandler mit einem Membrantopf, wobei der Boden des Topfes eine Membran ausbildet und ein Plättchen aus piezo-elektrischem Material mit der Membran verbunden ist. Dabei ist vorgesehen, dass die Membran wenigstens zu einem Anteil aus einem FaserVerbundwerkstoff besteht.

Aus der JP 2010050963 A ist ein Ultraschallsensor-Gehäuse bekannt, das ein piezoelektrisches Element verwendet. Ein Seitenwandteil ist derart vorgesehen, dass es einen Bereich einer schwingfähigen Membran umgibt, in dem das piezoelektrische Element vorgesehen ist, und das eine Öffnung an einer der schwingfähigen Membran zugewandten Stelle aufweist. Die schwingfähige Membran besteht aus einem thermoplastischen Harz, das faserartige Füllstoffe enthält.

Die DE 102012211011 A1 beschreibt einen akustischen Sensor umfassend eine schwingfähige Membran mit einem Wandlerelement und ein Sensorgehäuse, wobei die Membran aus einem Faserverbundwerkstoff gefertigt ist und als separate Komponente mit dem Sensorgehäuse verbunden ist.
Für die ordnungsgemäße Funktion der Schallwandler ist es erforderlich, das Einkoppeln von Schwingungen in das Gehäuse des Schallwandlers zu vermeiden, da eine starke Schwingungseinleitung in das Gehäuse zu einem verlängerten Nachschwingen der Membran nach Abschaltung der Anregung der Membran durch das Wandlerelement führt. Ein derartiges Nachschwingen begrenzt den kleinsten mit dem Ultraschallsensor messbaren Abstand. Je länger das Nachschwingen, desto größer ist der kleinste messbare Abstand. Im Stand der Technik ist es daher üblich, den Schallwandler und das Gehäuse als getrennte Einzelteile zu fertigen und unter Verwendung einer zusätzlichen Dichtung zusammenzufügen. Als Dichtung wird beispielsweise ein Silikonring verwendet, der neben der Funktion des Abdichtens des Gehäuses auch die Funktion der Schwingungsentkopplung übernimmt. Nachteilig hieran ist jedoch, dass die verwendeten Dichtungen eine potentielle Schwachstelle für das Eindringen von Feuchte oder Verschmutzungen darstellen und für das Einbauen der Dichtung zusätzliche Arbeitsschritte bei der Herstellung des Ultraschallsensors erforderlich sind.

### Offenbarung der Erfindung

Es wird ein Schallwandler umfassend einen Membrantopf, ein Wandlerelement und ein Gehäuse vorgeschlagen, wobei der Membrantopf eine Membran und eine Wandung aufweist, wobei das Gehäuse ein Gehäuseoberteil und ein Gehäuseunterteil umfasst. Ferner ist vorgesehen, dass die Membran, die Wandung des Membrantopfs und zumindest ein Gehäuseteil einstückig als ein Faser-Kunststoff-Verbundbauteil ausgestaltet sind, wobei das Gehäuseoberteil über eine Schulter in den Membrantopf übergeht und wobei zumindest ein erster Bereich des Faser-Kunststoff-Verbundbauteils mit Fasern verstärkt ist und mindestens ein zweiter Bereich des Faser-Kunststoff-Verbundbauteils frei von Fasern ist, so dass Wellen in dem Verbundbauteil an einem Übergang von dem mindestens einen ersten Bereich zu dem mindestens einen zweiten Bereich zumindest teilweise reflektiert werden, wobei
i) die Schulter des Gehäuseoberteils mit Fasern verstärkt ist und die Wandung des Membrantops frei von Fasern ist, oder
ii) die Wandung des Membrantopfs oder Teilbereiche des Gehäuseoberteils mit Fasern verstärkt sind und die Schulter des Gehäuseoberteils frei von Fasern ist.

Der vorgeschlagene Schallwandler weist eine Membran auf, die vorzugsweise als Kreisfläche ausgestaltet ist und in dem Membrantopf an eine vorzugsweise entsprechend kreiszylindrische Wandung angrenzt. Alternativ ist es denkbar, für die Membran und entsprechend für die Wandung des Membrantopfs andere Formen vorzusehen. So kann die Membran beispielsweise auch als eine ovale Fläche oder als eine rechteckige Fläche ausgestaltet werden, wobei die Wandung des Membrantopfs eine entsprechende Form aufweist, somit beispielsweise ebenfalls als ovaler Zylinder oder als rechteckiger Zylinder ausgestaltet ist.

An die Wandung des Membrantopfs schließt sich zumindest ein Gehäuseteil einstückig an. Das Gehäuse des Schallwandlers nimmt das Wandlerelement sowie ggf. weitere Komponenten wie beispielsweise Mittel zur Ansteuerung des Wandlerelements auf. Des Weiteren kann das Gehäuse insbesondere Befestigungsmittel umfassen, mit denen der Schallwandler an seinem Einsatzort befestigt werden kann.

Zur Reduzierung einer störenden Schwingung des Gehäuses des Schallwandlers ist vorgesehen, in dem Faser-Kunststoff-Verbundbauteil-Bereiche mit unterschiedlichen Schwingungseigenschaften auszubilden. Wellen, die sich beispielsweise ausgehend von der Membran in dem Verbundbauteil ausbreiten, werden dann an einen Übergang zwischen Bereichen mit unterschiedlichen Schwingungseigenschaften zumindest teilweise reflektiert. Aufgrund der zumindest teilweisen Reflexion wird eine Übertragung der Wellen zwischen den Bereichen mit unterschiedlichen Schwingungseigenschaften reduziert.

Für das Ausbilden der Bereiche mit unterschiedlichen Schwingungseigenschaften ist erfindungsgemäß vorgesehen, dass zumindest ein erster Bereich des Faser-Kunststoff-Verbundbauteils mit Fasern verstärkt ist und mindestens ein zweiter Bereich des Faser-Kunststoff-Verbundbauteils frei von Fasern ist. Durch das Einbringen von Fasern zur Verstärkung des Faser-Kunststoff-Verbundbauteils verändern sich die Dichte bzw. die Masse des betreffenden Bereichs sowie dessen Festigkeit und Steifigkeit. Sowohl die Dichte bzw. die aus der Dichte und dem Volumen bestimmbare Masse als auch die Steifigkeit wirken sich auf die Schwingungseigenschaften des jeweiligen Bereichs aus.

Als eine zusätzliche Möglichkeit zur zumindest teilweisen Reflexion von Wellen innerhalb des Faser-Kunststoff-Verbundbauteils ist bevorzugt vorgesehen, dass an der Außenseite und/oder an der Innenseite des Faser-Kunststoff-Verbundbauteils mindestens eine Stoßstelle in Form einer Kante oder Rippe angeordnet ist. Durch das zusätzliche Anordnen einer Kante oder Rippe wird in dem Bereich dieser Kante bzw. Rippe durch die zusätzliche Masse und der erhöhten Steifigkeit eine Stoßstelle ausgebildet, an der durch das Faser-Kunststoff-Verbundbauteil laufende Wellen zumindest teilweise reflektiert werden. Die Kante oder Rippe ist mit dem Faser-Kunststoff-Verbundbauteil einstückig ausgeführt.

Bevorzugt werden die Kanten und/oder Rippen an den Stellen in dem Faser-Kunststoff-Verbundbauteil angeordnet, an dem ein Übergang zwischen einem ersten Bereich und einem zweiten Bereich vorhanden ist. Auf diese Weise wird durch die zusätzliche Kante oder Rippe die Wellen-reflektierende Wirkung des Übergangs zwischen einem mit Fasern verstärkten Bereich und einem unverstärkten Bereich weiter verstärkt.

Des Weiteren ist es bevorzugt, im Inneren des Faser-Kunststoff-Verbundbauteils mindestens eine Versteifungsstruktur mit dem Faser-Kunststoff-Verbundbauteil zu verbinden. Die mindestens eine Versteifungsstruktur wird bevorzugt im Bereich der Wandung des Membrantopfs angeordnet.

Die Versteifungsstrukturen weisen bevorzugt eine hohe Steifigkeit, eine hohe Masse und/oder eine hohe Dämpfungswirkung für Schwingungen auf.

Durch das Anordnen mindestens einer separaten Versteifungsstruktur im Bereich der Wandung des Membrantopfs befinden sich die Versteifungsstrukturen im Bereich des Übergangs zwischen der stirnseitig befindlichen Membran und dem einstückig in dem Verbundbauteil ausgeführten Teil des Gehäuses. Eine Übertragung von Schwingungen auf das Gehäuse wird hierdurch wirksam unterbunden.

Das Material der Versteifungsstruktur ist bevorzugt ausgewählt aus einem Metall, einer Keramik, einem Kunststoff, einem faserverstärkten Kunststoff oder einer Kombination mindestens zweier dieser Materialien.

Das Material des Faser-Kunststoff-Verbundbauteils umfasst bevorzugt ein Matrixmaterial sowie in das Matrixmaterial eingebettete Fasern.

Die Fasern sind in dem mindestens einen ersten Bereich bevorzugt in einer einlagigen oder mehrlagigen Faserstruktur eingebracht. Die Faserstruktur ist bevorzugt ausgewählt aus einem Gewebe, einem Gelege, einem Gewirk, einem Gestrick, einem Geflecht, einem Vliesstoff oder einer Kombination mindestens zweier dieser Faserstrukturen.

Bevorzugt sind die Fasern ausgewählt aus Glasfasern, Kohlenstofffasern, Aramidfasern, Basaltfasern, Fasern aus ultrahochmolekulargewichtigem Polyethylen (UHMWPE), Fasern aus Poly(p-phenylen-2,6-benzobisoxazol) (PBO), Fasern aus flüssigkristallinem Polymer (LCP), Flachsfasern oder Kombinationen mindestens zweier dieser Fasern.

Das Matrixmaterial des Faser-Kunststoff-Verbundbauteils ist ein Kunststoff. Der Kunststoff ist bevorzugt ausgewählt aus einem thermoplastischen oder duroplastischen Kunststoff. Insbesondere sind Epoxidharze als Matrixmaterial geeignet.

Zum wirksamen Unterbinden der Übertragung von Schwingungen auf den Gehäuseteil des Faser-Kunststoff-Verbundbauteils ist bevorzugt zumindest ein Teilbereich der Membran und/oder zumindest ein Teilbereich der Wandung des Membrantopfs und/oder zumindest ein Teilbereich des Gehäuseteils faserverstärkt. Dabei ist es besonders bevorzugt, beim Übergang von der Membran zur Wandung des Membrantopfs und/oder von der Wandung des Membrantopfs zum Gehäuseteil den Wechsel von dem ersten Bereich in den zweiten Bereich vorzusehen.

Wenn die Membran mit mindestens einem faserverstärkten Teilbereich versehen ist, so ist es bevorzugt, dass die Form des mindestens einen faserverstärkten Teilbereichs der Membran ausgewählt ist aus einer Kreisfläche, einer Ovalfläche, einer kreisrunden Ringform, einer ovalen Ringform, einer Rechteckform oder einer Kombination mindestens zweier dieser Formen. Bei einer Kombination mehrerer dieser Formen ist es besonders bevorzugt, wenn diese Formen konzentrisch angeordnet sind, also die Formen einen gemeinsamen Mittelpunkt aufweisen. Bevorzugt ist die Membran vollständig als erster Bereich, also als ein faserverstärkter Bereich, ausgeführt.

Werden die Fasern in mehreren Lagen eingebracht, so kann für jede dieser Lagen die gleiche geometrische Form für den mindestens einen faserverstärkten Teilbereich verwendet werden. Alternativ kann für jede der Lagen die geometrische Form des mindestens einen faserverstärkten Teilbereichs variiert werden. Beispielsweise kann in einer ersten Lage der faserverstärkte Teilbereich eine Rechteckform aufweisen und in einer weiteren Lage kann der faserverstärkte Teilbereich eine Kreisform aufweisen.

Bevorzugt sind durch die Wahl der Form des mindestens einen faserverstärkten Teilbereichs und/oder durch die Wahl der Anzahl der mit fasern verstärkten Teilbereiche mindestens zwei verschiedene Resonanzfrequenzen der Membran vorgegeben.

Der Gehäuseteil des Faser-Kunststoff-Verbundbauteils ist erfindungsgemäß als ein Gehäuseoberteil ausgebildet, wobei der Schallwandler bevorzugt zusätzlich ein Gehäuseunterteil umfasst, welches mit dem Gehäuseoberteil verbunden ist.

Die Verbindung zwischen dem Gehäuseoberteil und dem Gehäuseunterteil ist bevorzugt derart ausgeführt, dass weder Feuchtigkeit noch Schmutz in das Innere des Gehäuses eindringen kann. Da jedoch keine Schwingungsdämpfende Eigenschaft dieser Verbindung erforderlich ist, kann zur Verbindung des Gehäuseunterteils mit dem Gehäuseoberteil beispielsweise eine Verschweißung oder eine Verklebung vorgenommen werden.

Bevorzugt ist das Wandlerelement des Schallwandlers als ein piezoelektrischer Wandler, ein elektrostatischer Wandler, ein Elektretwandler oder ein Piezoelektretwandler ausgeführt. Des Weiteren kann der Schallwandler innerhalb des Gehäuses weitere Komponenten umfassen, wie beispielsweise Mittel zur Ansteuerung des Wandlerelements.

Bevorzugt weist das Gehäuse ein Anschlusselement auf, mit dem eine elektrische Verbindung zum Schallwandler hergestellt werden kann. Bei den Anschlussmitteln kann es sich beispielsweise um eine Kabeldurchführung durch das Gehäuse oder um eine elektrische Steckverbindung handeln.

### Vorteile der Erfindung

Durch die vorgeschlagene einstückige Ausführung der Membran, der Wandung des Membrantopfs und zumindest eines Gehäuseteils kann auf das Anordnen eines Dichtungselements zwischen dem aus der Wandung und der Membran gebildeten Wandlertopf und dem Gehäuseoberteil verzichtet werden. Eine Übertragung von Schwingungen von der Membran auf das Gehäuseoberteil wird hierbei durch das Vorsehen eines Übergangs zwischen mindestens einem ersten, mit Fasern verstärkten Bereichs zu mindestens einem zweiten Bereich, der frei von Fasern ist, vermieden. An der Grenze zwischen dem mindestens einen ersten Bereich und dem mindestens einen zweiten Bereich ändern sich die Schwingungseigenschaften des vorgeschlagenen Verbundbauteils sprungartig, so dass es zu einer zumindest teilweisen Reflexion von durch das Verbundbauteil laufenden Wellen kommt. Eine Übertragung der Wellen über den Übergang hinaus wird dadurch deutlich reduziert, ohne dass es der Anordnung weiterer dämpfender Elemente, wie beispielsweise einer Elastomerdichtung bedarf.

In vorteilhaften Weiterbildungen der Erfindung wird die durch den Übergang von faserverstärkten zu nicht verstärkten Bereichen hervorgerufene Reflexion der Wellen durch das Anordnen von Versteifungsstrukturen und/oder Kanten weiter verbessert. Sowohl durch das Anordnen von Kanten bzw. Rippen als auch durch das Anordnen von Versteifungsstrukturen werden sprunghafte Änderungen der Schwingungseigenschaften des vorgeschlagenen Verbundbauteils erreicht, wobei es an diesen Übergangsbereichen zu einer zumindest teilweisen Reflexion der Wellen kommt.

Durch die Möglichkeit, auf das Anordnen einer elastischen Dichtung in dem Gehäuse des Schallwandlers zu verzichten, wird die Robustheit des Schallwandlers gegenüber Umwelteinflüssen weiter verstärkt, da keine Schwachstelle im Gehäuse vorhanden ist, die das Eindringen von Feuchtigkeit oder Verschmutzungen erlaubt. Des Weiteren wird die Herstellung des Schallwandlers vereinfacht, da die Anzahl der zusammenzufügenden Bauteile reduziert ist.

In weiteren Varianten der Erfindung weist die Schallwandlergestaltung eine in mehrere Teilbereiche unterteilte Membran auf, wobei zumindest ein erster Teilbereich der Membran faserverstärkt ist und mindestens ein zweiter Teilbereich der Membran frei von Fasern ist. Durch diese Gestaltung der Membran ergibt sich die Möglichkeit, zwei oder mehr resonante Arbeitsfrequenzen mit unterschiedlichen Richtcharakteristiken der Schallabstrahlung und des Schallempfangs zu realisieren. Mehrere Arbeitsfrequenzen können mit Hilfe einer geeigneten Elektronik genutzt werden, um Situationsabhängig eine geeignete Richtcharakteristik auszuwählen.

Mit einer derartigen Schallwandlergestaltung lassen sich kleinere Abstände der Arbeitsfrequenzen realisieren als mit Schallwandlern nach dem Stand der Technik. Diese kleineren Abstände der Arbeitsfrequenzen stellen einen besonderen Vorteil für die Nutzung mehrerer Arbeitsfrequenzen mit einer einfachen signalverarbeitenden Elektronik dar.

Bei der Gestaltung der Membran können die Fasern in mehreren Lagen eingebracht werden. Dabei kann für jede Lage die geometrische Ausgestaltung der faserverstärkten Teilbereiche und der faserfreien Teilbereiche der Membran variiert werden, so dass eine oder mehrere Faserschichten eine von anderen Faserschichten verschiedene geometrische Gestaltung der Teilbereiche aufweist. Durch eine solche Kombination ergeben sich vergrößerte Gestaltungsmöglichkeiten in Bezug auf die gezielte Einstellung der resonanten Arbeitsfrequenz und der Richtcharakteristik.

### Kurze Beschreibung der Figuren

Es zeigen:
- Figur 1: einen Schallwandler mit einem Faser-Kunststoff-Verbundbauteil,
- Figuren 2 bis 7: verschiedene Beispiele von Faser-Kunststoff-Verbundbauteilen mit mindestens einem faserverstärkten Bereich und mindestens einem Bereich, der frei von Fasern ist,
- Figuren 8 bis 11: Beispiele von Faser-Kunststoff-Verbundbauteilen mit einer faserverstärkten Membran und an der Innenseite des Faser-Kunststoff-Verbundbauteils angeordneten Kanten,
- Figuren 13 und 14: zwei Beispiele eines Faser-Kunststoff-Verbundbauteils mit zusätzlichen Versteifungsstrukturen, und
- Figuren 15 bis 20: verschiedene Beispiele von Faser-Kunststoff-Verbundbauteils mit in Teilbereichen verstärkter Membran.

### Ausführungsformen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

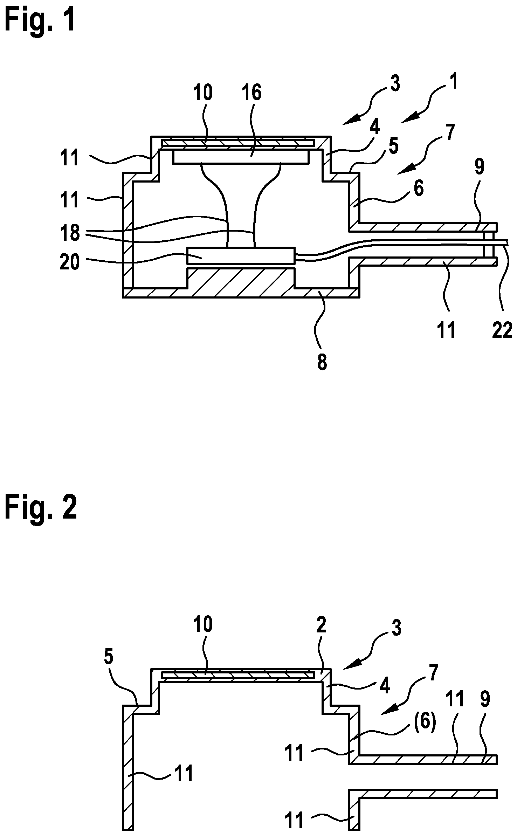

Die in den Figuren 1, 2, 6 und 8-20 gezeigten und in den zugehörigen Textpassagen beschriebenen Beispiele für Faser-Kunststoff-Verbundbauteile sind hierbei nicht gemäß der Erfindung ausgebildet. Figur 1 zeigt eine schematische Darstellung eines Schallwandlers 1 in einer Schnittansicht von der Seite. Der Schallwandler 1 umfasst ein Faser-Kunststoff-Verbundbauteil 7, welches einstückig ausgeführt ist, und einen Membrantopf 3 und einen Gehäuseteil 6 umfasst. Der Membrantopf 3 umfasst stirnseitig eine Membran 2, die an eine Wandung 4 des Membrantopfs 3 angrenzt. An der Innenseite der Membran 2 ist ein Wandlerelement 16 aufgenommen, welches beispielsweise als ein Piezoelement ausgeführt ist. Alternativ kann das Wandlerelement 16 beispielsweise als ein elektrostatischer Wandler, ein Elektretwandler oder ein Piezoelektretwandler ausgeführt sein.

Das Wandlerelement 16 steht über Verbindungsleitungen 18 mit einer Ansteuerelektronik 20 in Verbindung.

Das Gehäuseteil 6, welches einstückig mit dem Faser-Kunststoff-Verbundbauteil 7 ausgeführt ist, ist in der Ausführungsform der Figur 1 als ein Gehäuseoberteil ausgestaltet. Der an den Membrantopf 3 grenzende Teil des Gehäuseteils 6 ist im Wesentlichen als eine Zylinderform mit einer an den Membrantopf 3 angrenzenden Schulter 5 ausgestaltet. Das Gehäuseteil 6 weist zusätzlich einen Anschlussbereich 9 auf. Durch den Anschlussbereich 9 ist eine Anschlussleitung 22 geführt, die eine elektrische Verbindung zu der Ansteuerelektronik 20 herstellt.

Die Ansteuerelektronik 20 ist in dem dargestellten Beispiel auf einem Gehäuseunterteil 8 angeordnet, welches mit dem Gehäuseoberteil verbunden ist. Alternativ wird die Ansteuerelektronik 20 in das Gehäuseteil 6 bzw. in das Faser-Kunststoff-Verbundbauteil 7 eingebaut. Das Gehäuseunterteil 8 dient dann lediglich als Deckel, um den Sensor zu verschließen.

In dem in Figur 1 dargestellten Beispiel ist das Faser-Kunststoff-Verbundbauteil 7 im Bereich der Membran 2 mit Fasern verstärkt, so dass dort ein faserverstärkter Bereich 10 ausgebildet wird. Die Wandung 4 des Membrantopfs 3 sowie der Gehäuseteil 6 mit der Schulter 5 und dem Anschlussbereich 9 sind jeweils frei von Fasern und somit als faserfreie Bereiche 11 ausgestaltet.

In dem in Figur 1 dargestellten Faser- Kunststoff-Verbundbauteil 7 ist zwischen der Membran 2 und der Wandung 4 des Membrantopfs 3 ein Übergang zwischen dem mit Fasern verstärkten ersten Bereich 10 und dem von Fasern freien zweiten Bereich 11 vorhanden. An diesem Übergang ändern sich die Materialeigenschaften des Faser-Kunststoff-Verbundbauteils 7 sprunghaft und insbesondere die Schwingungseigenschaften des Faser-Kunststoff-Verbundbauteils 7 ändern sich sprunghaft. Wellen, die ausgehend von der Membran 2 durch das Faser-Kunststoff-Verbundbauteil 7 laufen, werden an diesem Übergang zumindest teilweise reflektiert, so dass eine Übertragung einer Schwingung der Membran 2 über die Wandung 4 auf den Gehäuseteil 6 reduziert wird.

In den Figuren 2 bis 7 sind verschiedene Ausführungsvarianten von Faser-Kunststoff-Verbundbauteilen 7 dargestellt. Die Figuren 2 bis 7 stellen das Faser-Kunststoff-Verbundbauteil 7 dabei jeweils in einer Schnittansicht von der Seite dar. Die geometrische Form des Faser-Kunststoff-Verbundbauteils 7 ist dabei in allen sechs in den Figuren 2 bis 7 dargestellten Beispielen identisch. Das Faser-Kunststoff-Verbundbauteil 7 weist jeweils einen Membrantopf 3 mit einer Membran 2 und einer Wandung 4 auf. Die Wandung 4 geht in einen Gehäuseteil 6 über, wobei der Gehäuseteil 6 einen Anschlussbereich 9 aufweist.

Das Faser-Kunststoff-Verbundbauteil 7 unterscheidet sich jeweils lediglich in der Anordnung der ersten Bereiche 10, die mit Fasern verstärkt sind, und der zweiten Bereiche 11, die frei von Fasern sind.

Im Beispiel der Figur 2 ist, wie mit Bezug zu Figur 1 dargestellt, lediglich die Membran 2 als erster Bereich 10 ausgeführt, der mit Fasern verstärkt ist. Die übrigen Bereiche des Faser-Kunststoff-Verbundbauteils 7 sind jeweils als zweite Bereiche 11 ausgestaltet, die frei von Fasern sind.

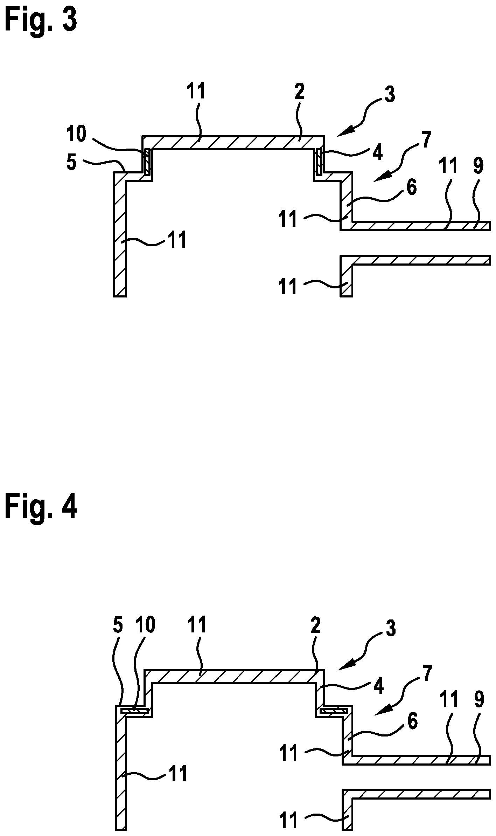

In der erfindungsgemäßen Ausführungsvariante der Figur 3 ist lediglich die Wandung 4 des Membrantopfs 3 als ein erster Bereich 10 ausgestaltet, der mit Fasern verstärkt ist. Die Membran 2 sowie der Gehäuseteil 6 sind als zweite Bereiche 11 ausgestaltet, die frei von Fasern sind.

In der in Figur 4 dargestellten Ausführungsvariante der Erfindung sind die Membran 2 sowie die Wandung 4 des Membrantopfs 3 als zweite Bereiche 11 ausgestaltet, die frei von Fasern sind. Der Gehäuseteil 6 weist in dem in Figur 4 dargestellten Ausführungsbeispiel eine angrenzend an Wandung 4 gelegene Schulter 5 mit dem ersten faserverstärkten Bereich 10 auf. Die übrigen Teile des Gehäuseteils 6 sind als zweiter Bereich 11 ausgeführt, der frei von Fasern ist.

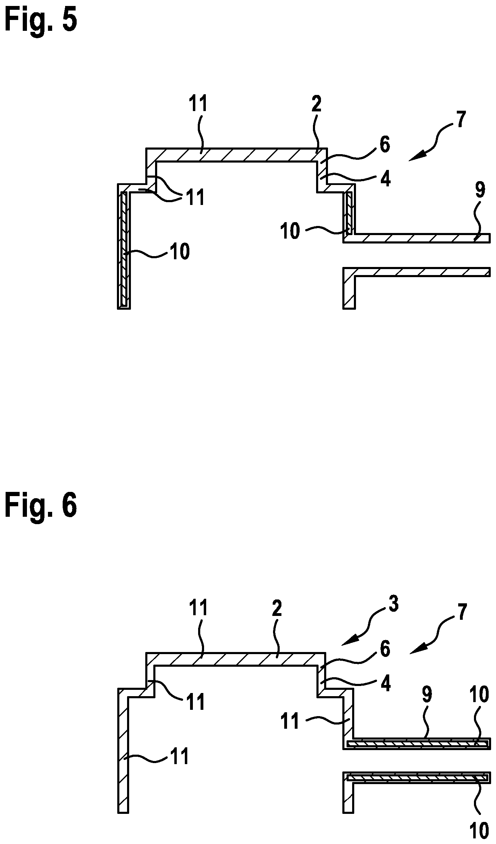

In den Figuren 5 und 6 sind, wie mit Bezug zur Figur 4 beschrieben, sowohl die Membran 2 als auch die Wandung 4 als zweite Bereiche 11 ausgestaltet, die frei von Fasern sind. In den Ausführungsformen der Figuren 5 und 6 sind jeweils Teilbereiche des Gehäuseteils 6 als erster Bereich 10 ausgestaltet, wobei der erste Bereich 10 jeweils nicht an die Wandung 4 des Membrantopfs 3 angrenzt. In dem Beispiel der Figur 6 ist lediglich der Anschlussbereich 9 als ein erster Bereich 10 ausgestaltet, das restliche Faser-Kunststoff-Verbundbauteil 7 ist als zweiter Bereich 11 ausgestaltet, der frei von Fasern ist.

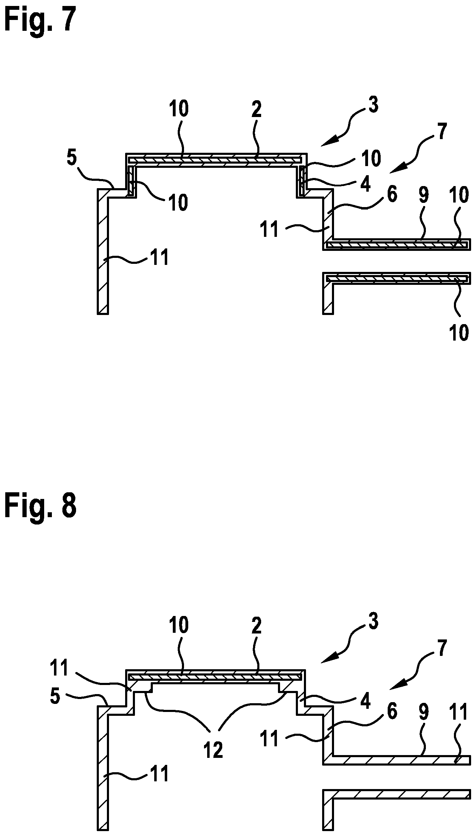

Die in den Figuren 2 bis 6 dargestellten Beispiele für die Anordnung des mindestens einen ersten Bereichs 10 und mindestens einen zweiten Bereichs 11 sind jeweils nur als Beispiele zu verstehen. Diese Ausführungsbeispiele können beliebig miteinander kombiniert werden, wie dies beispielsweise in der Figur 7 dargestellt ist. Die Figur 7 stellt dabei eine Kombination der Anordnung des mindestens einen ersten Bereichs 10 der Figuren 2, 3 und 6 dar.

Des Weiteren sind für die Anordnung der ersten Bereiche und der zweiten Bereiche viele weitere Anordnungen denkbar.

Die Figuren 8 bis 12 zeigen jeweils ein Faser-Kunststoff-Verbundbauteil 7, welches wie mit Bezug zu Figur 2 bereits beschrieben eine Membran 2, eine Wandung 4 des Membrantopfs 3 sowie einen Gehäuseteil 6 aufweist. In den Schnittdarstellungen der Figuren 8 bis 12 ist zu erkennen, dass die Membran 2 als ein erster Bereich 10 ausgeführt ist, der mit Fasern verstärkt ist. Die übrigen Bereiche des Faser-Kunststoff-Verbundbauteils 7 sind frei von Fasern. Durch den Übergang von einem ersten Bereich 10, der mit Fasern verstärkt ist, zu einem zweiten Bereich 11, der frei von Fasern ist, wird an dem Übergang zwischen der Membran 2 zu der Wandung 4 eine Veränderung der Schwingungseigenschaften des Faser-Kunststoff-Verbundbauteils 7 erreicht, mittels welcher die Wellen, die sich ausgehend von der Membran 2 in Richtung des Gehäuseteils 6 bewegen, zumindest teilweise reflektiert werden.

Um die Reflexion der Wellen weiter zu unterstützen und Schwingungen außerhalb der Membran 2 des Faser-Kunststoff-Verbundbauteils 7 weiter zu reduzieren, ist an dem Übergang von der Membran 2 zu der Wandung 4 des Membrantopfs 3 in den Ausführungsformen der Figuren 8 bis 12 jeweils zumindest ein Vorsprung in Form einer Kante 12 angeordnet. Im Bereich der Kante 12 ist gegenüber den übrigen Bereichen des Faser-Kunststoff-Verbundbauteils 7 eine erhöhte Menge an Material lokalisiert, so dass dieser Bereich andere Schwingungseigenschaften aufweist, als die übrigen Teile des Faser-Kunststoff-Verbundbauteils 7.

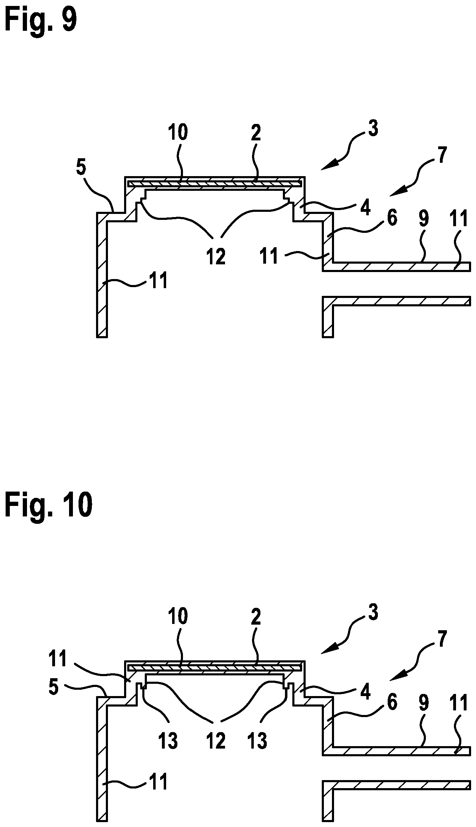

Im Beispiel der Figur 8 ist dabei eine einzige Kante 12 angeordnet, die an der Innenseite des Faser-Kunststoff-Verbundbauteils 7 im Bereich des Übergangs von der Wandung 4 zur Membran 2 umlaufend ausgestaltet ist. In der Ausführungsform der Figur 9 weist die Kante 12 zwei Stufen auf, so dass die Kante 12 nicht nur eine Stoßstelle einbringt, an der Wellen reflektiert werden können, sondern zwei direkt aufeinanderfolgende.

Im Beispiel der Figur 10 ist an der Kante 12 zusätzlich eine umlaufende Rippe 13 angeordnet, die stoffschlüssig mit der Kante 12 verbunden ist und durch das weitere Material die Steifigkeit und die Masse in diesem Bereich weiter erhöht. Dadurch führt auch das Vorsehen der Rippe 13 zu einer Stoßstelle, an der Wellen in dem Material zumindest teilweise reflektiert werden.

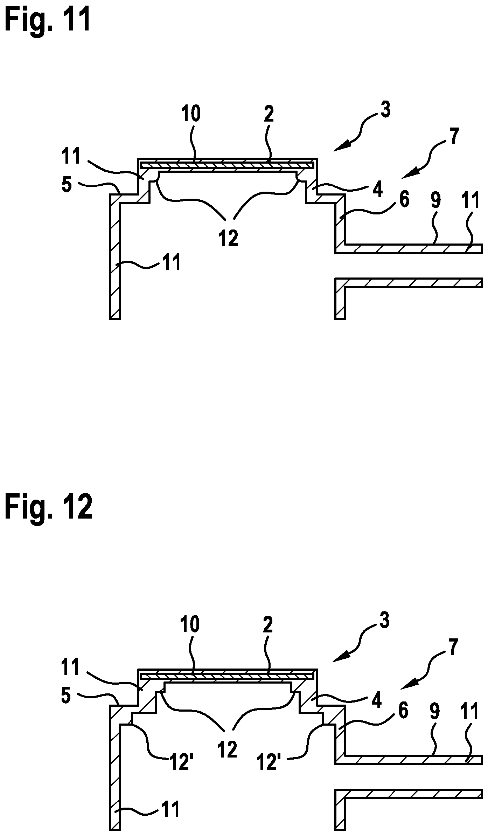

Im Beispiel der Figur 11 ist die Kante 12 abgerundet ausgestaltet, entspricht jedoch sonst der mit Bezug zu Figur 8 beschriebenen Ausführungsform.

In dem in Figur 12 dargestellten Beispiel ist zusätzlich zu der bereits mit Bezug zu Figur 8 beschriebenen Ausführungsform in dem Bereich des Gehäuseteils 6 eine zusätzliche Kante 12' angeordnet. Hierdurch werden in dieser Ausführungsform zwei Stoßstellen ausgebildet, die eine Übertragung von Wellen ausgehend von der Membran 2 zu dem Anschlussbereich 9 besonders gut unterdrücken.

Selbstverständlich lassen sich die in den Figuren 8 bis 12 dargestellten Ausführungsvarianten beliebig kombinieren. Des Weiteren ist es denkbar, an weiteren, in den Figuren 8 bis 12 nicht dargestellten Positionen Kanten und/oder Rippen anzuordnen. Die Kanten bzw. Rippen werden jeweils bevorzugt stoffschlüssig in dem Faser-Kunststoff-Verbundbauteil ausgebildet.

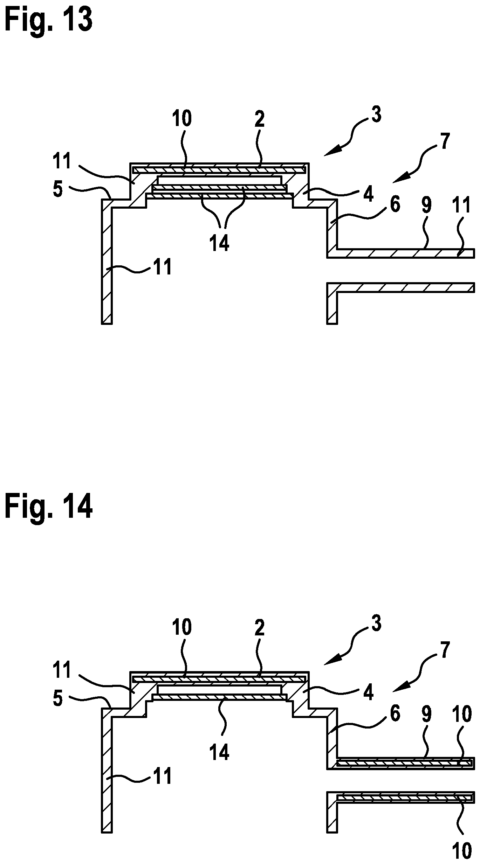

In den Figuren 13 und 14 sind zwei Beispiel eines Faser-Kunststoff-Verbundbauteils 7 dargestellt, wobei das Faser-Kunststoff-Verbundbauteil 7 wieder eine Membran 2, eine Wandung 4 sowie einen Gehäuseteil 6 aufweist.

In dem in Figur 13 dargestellten Beispiel sind im Bereich der Wandung 4 zwei Versteifungsstrukturen 14 mit dem Faser-Kunststoff-Verbundbauteil 7 verbunden. An den Stellen, an denen die Versteifungsstrukturen 14 mit dem Faser-Kunststoff-Verbundbauteil 7 verbunden sind, wird die Steifigkeit erhöht, so dass dort eine Stoßstelle entsteht. An den durch die beiden Versteifungsstrukturen 14 eingebrachten Stoßstellen werden durch das Faser-Kunststoff-Verbundbauteil 7 laufende Wellen zumindest teilweise reflektiert, so dass die Übertragung von Wellen von der Membran 2 auf den Gehäuseteil 6 deutlich reduziert wird.

In der in Figur 14 dargestellten Variante ist im Gegensatz zu der mit Bezug zu Figur 13 beschriebenen Ausführungsform nur eine Versteifungsstruktur 14 angeordnet. Um eine Übertragung von Wellen, insbesondere in den Anschlussbereich 9 zu reduzieren, wurde in der in Figur 14 dargestellten Ausführungsform der Anschlussbereich 9 als ein erster Bereich 10 ausgestaltet und mit Fasern verstärkt. Gegenüber den weiteren Teilen des Gehäuseteils 6, die als zweite Bereiche 11 ausgestaltet sind, also frei von Fasern sind, sind in dem Anschlussbereich 9 die Schwingungseigenschaften des Faser-Kunststoff-Verbundbauteils 7 verändert, so dass an dem Übergang eine Stoßstelle entsteht und durch das Faser-Kunststoff-Verbundbauteil 7 laufende Wellen zumindest teilweise reflektiert werden.

Die in den Figuren 13 und 14 beispielhaft dargestellten Versteifungsstrukturen 14 können selbstverständlich auch mit den in den Figuren 2 bis 12 dargestellten Ausführungsvarianten kombiniert werden. Des Weiteren kann der Fachmann auch an weiteren Positionen Versteifungsstrukturen 14 anordnen.

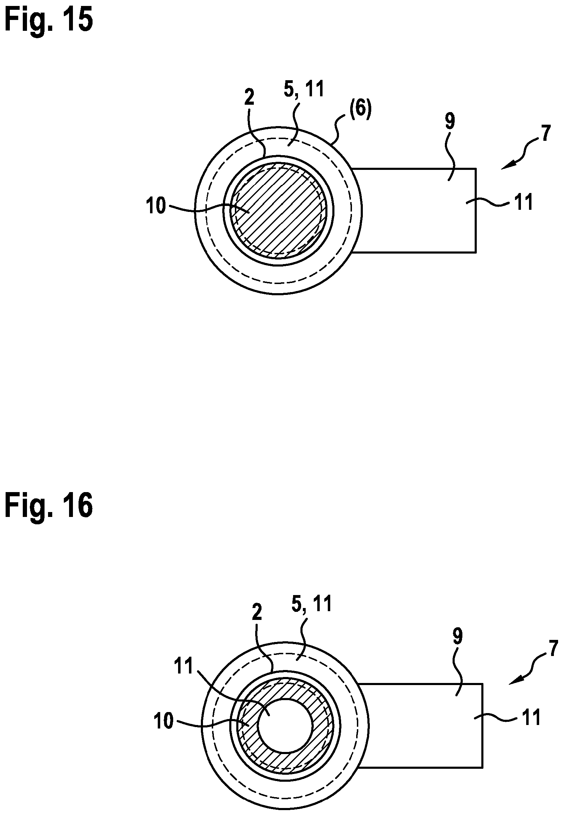

In den Figuren 15 bis 19 sind jeweils Faser-Kunststoff-Verbundbauteile 7 in einer Ansicht von oben dargestellt, wobei jeweils zumindest ein Teilbereich der stirnseitigen Membran 2 als ein erster Bereich 10 ausgeführt ist, der mit Fasern verstärkt ist, und zumindest ein weiterer Teilbereich der Membran 2 als ein zweiter Bereich 11 ausgestaltet ist, der frei von Fasern ist.

In dem in Figur 15 dargestellten Beispiel ist ein einziger erster Bereich 10 der Membran 2 mit Fasern verstärkt. Dieser erste Bereich 10 ist in Form einer Kreisfläche ausgeführt, die zentriert auf der ebenfalls kreisförmigen Fläche der Membran 2 angeordnet ist. In dem in Figur 15 dargestellten Beispiel ist die Fläche der Membran 2 vollständig als erster Bereich 10 ausgestaltet.

In dem in Figur 16 dargestellten Beispiel ist der einzige erste Bereich 10, der mit Fasern verstärkt ist, als ein Kreisring ausgeführt, dessen Mittelpunkt mit dem Mittelpunkt der Fläche der Membran 2 übereinstimmt. Somit ist im Zentrum der Membran 2 ein zweiter Bereich 11 ausgebildet, der frei von Fasern ist.

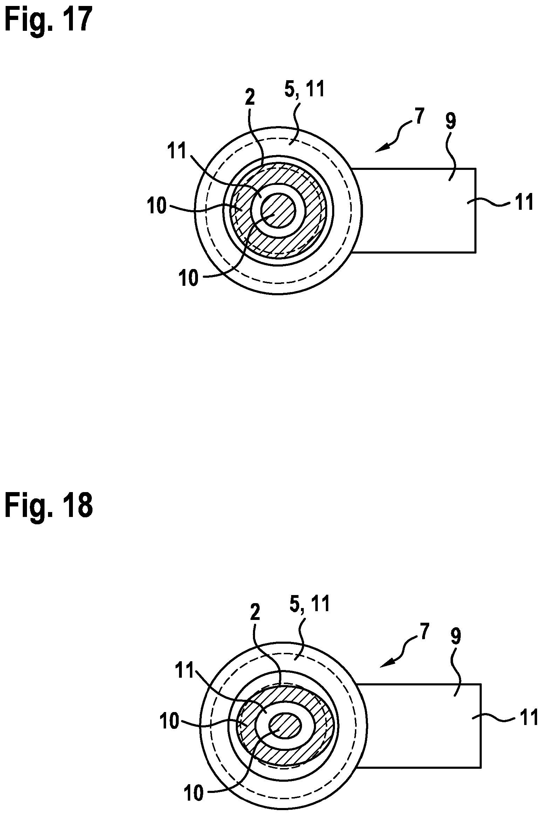

In dem in Figur 17 dargestellten Beispiel ist zusätzlich zu dem einzigen ersten Bereich 10 der Figur 16 ein weiterer erster Bereich 10 im Zentrum der Membran 2 in Form einer Kreisfläche ausgebildet.

In dem in Figur 18 dargestellten Beispiel sind auf der Fläche der Membran 2 zwei erste Bereiche 10 ausgebildet, die mit Fasern verstärkt sind. Dabei sind die beiden ersten Bereiche 10 konzentrisch angeordnet, d. h. ihre beiden Mittelpunkte stimmen überein. Einer der ersten Bereiche 10 ist als eine Ovalfläche ausgeführt und ein weiterer erster Bereich 10 ist als ovaler Ring ausgeführt. Die zwischen den beiden ersten Bereichen 10 gelegene Fläche der Membran 2 ist als ein zweiter Bereich 11 ausgestaltet, der nicht mit Fasern verstärkt ist.

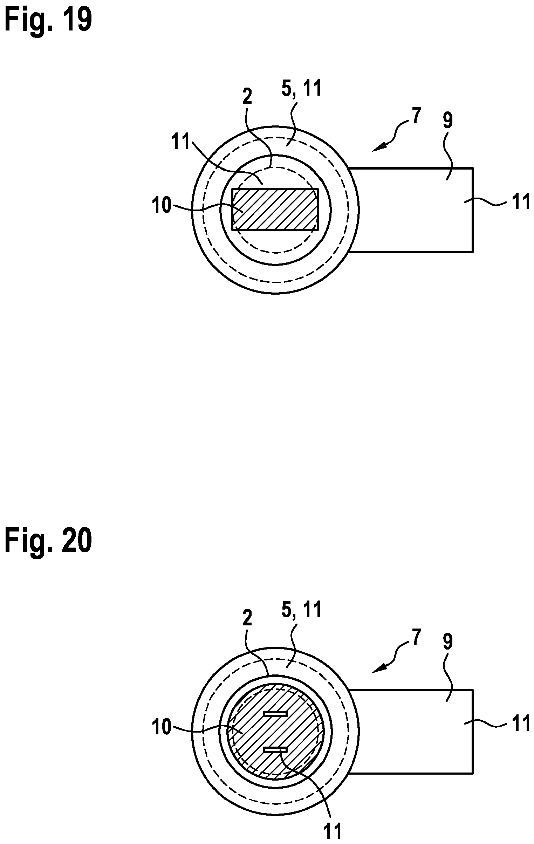

In der Figur 19 ist eine Membran 2 dargestellt, die einen einzigen ersten Bereich 10 aufweist. Der erste Bereich 10 ist dabei als eine Rechteckfläche ausgestaltet, deren Mittelpunkt dem Mittelpunkt der Membran 2 entspricht.

In der Figur 20 ist eine Membran 2 dargestellt, die bis auf zwei Aussparungen in Form von zwei Rechtecken als ein erster Bereich 10 ausgestaltet und somit mit Fasern verstärkt ist. Die beiden rechteckigen Aussparungen stellen zwei zweite Bereiche 11 dar, die nicht mit Fasern verstärkt sind.

Bei den in den Figuren 15 bis 20 dargestellten Beispielen weist die Membran 2 jeweils mindestens einen ersten Bereich 10 sowie gegebenenfalls einen zweiten Bereich 11 auf. Durch diese Ausgestaltung kann nicht nur die Übertragung von Schwingungen auf den Gehäuseteil 6 reduziert werden, sondern es können zusätzlich die mechanischen Eigenschaften der Membran 2 derart eingestellt werden, dass ein bestimmtes vorgegebenes Abstrahlverhalten erreicht wird.

Durch die Schallwandlergestaltung mit teilbereichsverstärkter Membran bietet sich die Möglichkeit zwei oder mehr resonante Arbeitsfrequenzen mit unterschiedlichen Richtcharakteristiken der Schallabstrahlung und des Schallempfangs zu realisieren. Mehrere Arbeitsfrequenzen können mit Hilfe einer geeigneten Elektronik genutzt werden, um Situationsabhängig eine geeignete Richtcharakteristik auszuwählen.

Mit einer derartigen Schallwandlergestaltung lassen sich kleinere Abstände der Arbeitsfrequenzen realisieren als mit Schallwandlern nach dem Stand der Technik. Diese kleineren Abstände der Arbeitsfrequenzen stellen einen besonderen Vorteil für die Nutzung mehrerer Arbeitsfrequenzen mit einer einfachen signalverarbeitenden Elektronik dar.

Innerhalb des durch die Ansprüche angegebenen Bereichs sind eine Vielzahl von Abwandlungen möglich, die im Rahmen fachmännischen Handelns liegen.

## Patentansprüche

1. Schallwandler (1) umfassend einen Membrantopf (3), ein Wandlerelement (16) und ein Gehäuse, wobei der Membrantopf (3) eine Membran (2) und eine Wandung (4) aufweist, wobei das Gehäuse ein Gehäuseoberteil und ein Gehäuseunterteil (8) umfasst, **dadurch gekennzeichnet, dass** die Membran (2), die Wandung (4) des Membrantopfs (3) und das Gehäuseoberteil einstückig als ein Faser-Kunststoff-Verbundbauteil (7) ausgestaltet sind, wobei das Gehäuseoberteil über eine Schulter (5) in den Membrantopf (3) übergeht und wobei mindestens ein erster Bereich (10) des Faser-Kunststoff-Verbundbauteils (7) mit Fasern verstärkt ist und mindestens ein zweiter Bereich (11) des Faser-Kunststoff-Verbundbauteils (7) frei von Fasern ist, so dass Wellen in dem Faser-Kunststoff-Verbundbauteil (7) an einem Übergang von dem mindestens einen ersten Bereich (10) zum mindestens einen zweiten Bereich (11) zumindest teilweise reflektiert werden, wobei
i) die Schulter (5) des Gehäuseoberteils mit Fasern verstärkt ist und die Wandung (4) des Membrantops (3) frei von Fasern ist, oder
ii) die Wandung (4) des Membrantopfs (3) oder Teilbereiche des Gehäuseoberteils mit Fasern verstärkt sind und die Schulter (5) des Gehäuseoberteils frei von Fasern ist.

2. Schallwandler (1) gemäß Anspruch 1, **dadurch gekennzeichnet, dass** an der Außenseite und/oder an der Innenseite des Faser-Kunststoff-Verbundbauteils (7) mindestens eine Kante (12) oder Rippe (13) angeordnet ist, so dass Wellen in dem Faser-Kunststoff-Verbundbauteil (7) im Bereich der mindestens einen Kante (12) oder Rippe (13) zumindest teilweise reflektiert werden, wobei die mindestens eine Kante (12) oder Rippe (13) einstückig mit dem Faser-Kunststoff-Verbundbauteil (7) ausgeführt ist.

3. Schallwandler (1) gemäß Anspruch 1 oder 2, **dadurch gekennzeichnet, dass** im Inneren des Faser-Kunststoff-Verbundbauteils (7) mindestens eine Versteifungsstruktur (14) mit dem Faser-Kunststoff-Verbundbauteil (7) verbunden ist.

4. Schallwandler (1) gemäß Anspruch 3, **dadurch gekennzeichnet, dass** das Material der Versteifungsstruktur (14) ausgewählt ist aus einem Metall, einer Keramik, einem Kunststoff, einem faserverstärktem Kunststoff oder einer Kombination mindestens zweier dieser Materialien.

5. Schallwandler (1) gemäß einem der Ansprüche 1 bis 4, **dadurch gekennzeichnet, dass** die Fasern in dem mindestens einen ersten Bereich (10) in Form einer einlagigen oder mehrlagigen Faserstruktur eingebracht sind, wobei die Faserstruktur ausgewählt ist aus einem Gewebe, einem Gelege, einem Gewirk, einem Gestrick, einem Geflecht, einem Vliesstoff oder einer Kombination mindestens zweier dieser Faserstrukturen.

6. Schallwandler (1) gemäß einem der Ansprüche 1 bis 5, **dadurch gekennzeichnet, dass** die Fasern ausgewählt sind aus Glasfasern, Kohlenstofffasern, Aramidfasern, Basaltfasern, Fasern aus ultrahochmolekulargewichtigem Polyethylen (UHMWPE), Fasern aus Poly(p-phenylen-2,6-benzobisoxazol) (PBO), Fasern aus flüssigkristallinem Polymer (LCP), Flachsfasern oder Kombinationen mindestens zweier dieser Fasern.

7. Schallwandler (1) gemäß einem der Ansprüche 1 bis 6, **dadurch gekennzeichnet, dass** der Kunststoff des Faser-Kunststoff-Verbundbauteils (7) ausgewählt ist aus einem thermoplastischen oder duroplastischen Kunststoff.

8. Schallwandler (1) gemäß einem der Ansprüche 1 bis 7, **dadurch gekennzeichnet, dass** zumindest ein Teilbereich der Membran (2) faserverstärkt ist.

9. Schallwandler (1) gemäß Anspruch 8, **dadurch gekennzeichnet, dass** der die Form des mindestens einen faserverstärkten Teilbereichs der Membran (2) ausgewählt ist aus einer Kreisfläche, einer Ovalfläche, einer kreisrunden Ringform, einer ovalen Ringform, einer Rechteckform oder einer Kombination mindestens zweier dieser Formen.

10. Schallwandler (1) gemäß Anspruch 8 oder 9, **dadurch gekennzeichnet, dass** die Fasern in Form einer mehrlagigen Faserstruktur in die Membran (2) eingebracht sind und dass die Form des faserverstärkten Teilbereichs in jeder Lage der Faserstruktur unterschiedlich gewählt ist.

11. Schallwandler (1) gemäß einem der Ansprüche 8 bis 10, **dadurch gekennzeichnet, dass** durch die Wahl der Form des mindestens einen faserverstärkten Teilbereichs und/oder durch die Wahl der Anzahl der mit fasern verstärkten Teilbereiche mindestens zwei verschiedene Resonanzfrequenzen der Membran (2) vorgegeben sind.

## Claims

1. Sound transducer (1) comprising a diaphragm pot (3), a transducer element (16) and a housing, wherein the diaphragm pot (3) has a diaphragm (2) and a wall (4), wherein the housing comprises a housing upper part and a housing lower part (8), **characterized in that** the diaphragm (2), the wall (4) of the diaphragm pot (3) and the housing upper part are designed in one piece in the form of a fibre-plastics composite component (7), wherein the housing upper part transitions into the diaphragm pot (3) via a shoulder (5) and wherein at least one first region (10) of the fibre-plastics composite component (7) is reinforced with fibres and at least one second region (11) of the fibre-plastics composite component (7) is free of fibres, such that waves are at least partially reflected in the fibre-plastics composite component (7) at a transition from the at least one first region (10) to the at least one second region (11), wherein
i) the shoulder (5) of the housing upper part is reinforced with fibres and the wall (4) of the diaphragm pot (3) is free of fibres, or
ii) the wall (4) of the diaphragm pot (3) or partial regions of the housing upper part is/are reinforced with fibres and the shoulder (5) of the housing upper part is free of fibres.

2. Sound transducer (1) according to Claim 1, **characterized in that** at least one edge (12) or rib (13) is arranged on the outer side and/or on the inner side of the fibre-plastics composite component (7), such that waves are at least partially reflected in the fibre-plastics composite component (7) in the region of the at least one edge (12) or rib (13), wherein the at least one edge (12) or rib (13) is configured in one piece with the fibre-plastics composite component (7).

3. Sound transducer (1) according to Claim 1 or 2, **characterized in that** at least one stiffening structure (14) is connected to the fibre-plastics composite component (7) inside the fibre-plastics composite component (7).

4. Sound transducer (1) according to Claim 3, **characterized in that** the material of the stiffening structure (14) is selected from a metal, a ceramic, a plastic, a fibre-reinforced plastic or a combination of at least two of these materials.

5. Sound transducer (1) according to one of Claims 1 to 4, **characterized in that** the fibres in the at least one first region (10) are introduced in the form of a single-layered or multi-layered fibre structure, wherein the fibre structure is selected from a woven fabric, a laid scrim, a formed-loop knitted fabric, a drawn-loop knitted fabric, a braid, a nonwoven fabric or a combination of at least two of these fibre structures.

6. Sound transducer (1) according to one of Claims 1 to 5, **characterized in that** the fibres are selected from glass fibres, carbon fibres, aramid fibres, basalt fibres, fibres composed of ultra-high-molecular-weight polyethylene (UHMWPE), fibres composed of poly(p-phenylene-2,6-benzobisoxazole)(PBO), fibres composed of liquid crystal polymer (LCP), flax fibres or combinations of at least two of these fibres.

7. Sound transducer (1) according to one of Claims 1 to 6, **characterized in that** the plastic of the fibre-plastics composite component (7) is selected from a thermoplastic or thermosetting plastic.

8. Sound transducer (1) according to one of Claims 1 to 7, **characterized in that** at least a partial region of the diaphragm (2) is fibre-reinforced.

9. Sound transducer (1) according to Claim 8, **characterized in that** the shape of the at least one fibre-reinforced partial region of the diaphragm (2) is selected from a circular area, an oval area, a circular ring shape, an oval ring shape, a rectangular shape or a combination of at least two of these shapes.

10. Sound transducer (1) according to Claim 8 or 9, **characterized in that** the fibres are introduced in the form of a multi-layered fibre structure into the diaphragm (2), and **in that** the shape of the fibre-reinforced partial region is selected so as to be different in each layer of the fibre structure.

11. Sound transducer (1) according to one of Claims 8 to 10, **characterized in that** at least two different resonant frequencies of the diaphragm (2) are predefined by the selection of the shape of the at least one fibre-reinforced partial region and/or by the selection of the number of fibre-reinforced partial regions.

## Revendications

1. Transducteur acoustique (1) comprenant un pot à membrane (3), un élément transducteur (16) et un boîtier, le pot à membrane (3) comportant une membrane (2) et une paroi (4), le boîtier comprenant une partie de boîtier supérieure et une partie de boîtier inférieure (8), **caractérisé en ce que** la membrane (2), la paroi (4) du pot à membrane (3) et la partie de boîtier supérieure sont conçues d'une seule pièce comme composant composite (7) en matière synthétique renforcée par des fibres, la partie de boîtier supérieure se fondant dans le pot à membrane (3) par le biais d'un épaulement (5) et au moins une première zone (10) du composant composite (7) en matière synthétique renforcée par des fibres étant renforcée avec des fibres et au moins une deuxième zone (11) du composant composite (7) en matière synthétique renforcée par des fibres étant exempte de fibres de sorte que des ondes dans le composant composite (7) en matière synthétique renforcée par des fibres soient au moins partiellement réfléchies au niveau d'une transition de l'au moins une première zone (10) à l'au moins une deuxième zone (11), i) l'épaulement (5) de la partie de boîtier supérieure étant renforcé avec des fibres et la paroi (4) du pot à membrane (3) étant exempte de fibres, ou ii) la paroi (4) du pot à membrane (3) ou des zones de la partie de boîtier supérieure étant renforcée(s) avec des fibres et l'épaulement (5) de la partie de boîtier supérieure étant exempt de fibres.

2. Transducteur acoustique (1) selon la revendication 1, **caractérisé en ce qu'**au moins un bord (12) ou une nervure (13) est disposé(e) du côté extérieur et/ou du côté intérieur du composant composite (7) en matière synthétique renforcée par des fibres de sorte que des ondes dans le composant composite (7) en matière synthétique renforcée par des fibres soient au moins partiellement réfléchies dans la zone de l'au moins un bord (12) ou une nervure (13), l'au moins un bord (12) ou une nervure (13) étant réalisé(e) d'une seule pièce avec le composant composite (7) en matière synthétique renforcée par des fibres.

3. Transducteur acoustique (1) selon la revendication 1 ou 2, **caractérisé en ce que**, à l'intérieur du composant composite (7) en matière synthétique renforcée par des fibres, au moins une structure de rigidification (14) est reliée au composant composite (7) en matière synthétique renforcée par des fibres.

4. Transducteur acoustique (1) selon la revendication 3, **caractérisé en ce que** le matériau de la structure de rigidification (14) est choisi parmi un métal, une céramique, une matière synthétique, une matière synthétique renforcée par des fibres ou une combinaison d'au moins deux de ces matériaux.

5. Transducteur acoustique (1) selon l'une des revendications 1 à 4, **caractérisé en ce que** les fibres dans l'au moins une première zone (10) sont introduites sous la forme d'une structure fibreuse monocouche ou multicouche, la structure fibreuse étant choisie parmi un tissu, un canevas, un tricot, un maillage, une tresse, un non-tissé ou une combinaison d'au moins deux de ces structures fibreuses.

6. Transducteur acoustique (1) selon l'une des revendications 1 à 5, **caractérisé en ce que** les fibres sont choisies parmi les fibres de verre, les fibres de carbone, les fibres d'aramide, les fibres de basalte, les fibres en polyéthylène de très haut poids moléculaire (UHMWPE), des fibres en poly(p-phénylène-2,6-benzobisoxazole) (PBO), les fibres en polymère cristallin liquide (LCP), les fibres de lin ou des combinaisons d'au moins deux de ces fibres.

7. Transducteur acoustique (1) selon l'une des revendications 1 à 6, **caractérisé en ce que** la matière synthétique du composant composite (7) en matière synthétique renforcée par des fibres est choisie parmi une matière synthétique thermoplastique ou thermodurcissable.

8. Transducteur acoustique (1) selon l'une des revendications 1 à 7, **caractérisé en ce qu'**au moins une zone de la membrane (2) est renforcée par des fibres.

9. Transducteur acoustique (1) selon la revendication 8, **caractérisé en ce que** la forme de l'au moins une zone, renforcée de fibres, de la membrane (2) est choisie parmi une zone circulaire, une zone ovale, une forme d'anneau circulaire, une forme d'anneau ovale, une forme rectangulaire ou une combinaison d'au moins deux de ces formes.

10. Transducteur acoustique (1) selon la revendication 8 ou 9, **caractérisé en ce que** les fibres sont introduites dans la membrane (2) sous la forme d'une structure fibreuse multicouche et **en ce que** la forme de la zone renforcée par des fibres est choisie différemment dans chaque couche de la structure fibreuse.

11. Transducteur acoustique (1) selon l'une des revendications 8 à 10, **caractérisé en ce qu'**au moins deux fréquences de résonance différentes de la membrane (2) sont spécifiées par le choix de la forme de l'au moins une zone renforcée par des fibres et/ou le choix du nombre de zones renforcées par des fibres.
